# FASCICULE DE BREVET EUROPEEN

(11) **EP 3 983 273 B1**
(45) Date de publication et mention de la délivrance du brevet: **31.05.2023**
(21) Numéro de dépôt: 20742802.0
(22) Date de dépôt: 08.06.2020
(51) Int. Cl.: B60W 30/14, B60W 50/00

(54) **PROCÉDÉ DE DÉTERMINATION DE LA VITESSE MAXIMALE AUTORISÉE POUR UN VÉHICULE AUTOMOBILE METTANT EN ?UVRE UNE FONCTION DE RÉGULATION DE VITESSE**
VERFAHREN ZUR BESTIMMUNG DER MAXIMAL ERLAUBTEN GESCHWINDIGKEIT FÜR EIN KRAFTFAHRZEUG MIT ADAPTIVER FAHRREGELUNGSSFUNKTION
METHOD FOR DETERMINING THE MAXIMUM AUTHORISED SPEED FOR A MOTOR VEHICLE WHICH USES AN ADAPTIVE CRUISE-CONTROL FUNCTION

(30) Priorité: 12.06.2019 FR 1906217
(43) Date de publication de la demande: 20.04.2022
(73) Titulaire: PSA Automobiles SA, 78300 Poissy (FR)
(72) Inventeur: DESCHAMPS, Vincent, 92240 Malakoff (FR); RIZZO, Audrey, 92150 Suresnes (FR); ETCHEVERRY, Céline, 91370 Verrières Le Buisson (FR)
(86) Numéro de dépôt international: PCT/FR2020/050969
(87) Numéro de publication internationale: WO 2020/249891

(56) Documents cités:
- FR-A1- 2 919 098
- FR-A1- 3 017 739
- FR-A1- 3 028 344
- FR-A1- 3 055 287
- FR-A1- 3 064 967
- US-A1- 2017 072 952
- US-A1- 2018 273 020

## Description

L'invention se rapporte au domaine des systèmes d'aide à la conduite équipant les véhicules automobiles. Les systèmes d'aide à la conduite, souvent dénommés sous l'acronyme anglais ADAS (pour « *Advanced driver-assistance systems* »), ont pour but d'alléger la charge du conducteur, notamment en le libérant de certaines tâches, en améliorant son attention et/ou sa perception de l'environnement, en détectant certains risques, en effectuant automatiquement des actions en réponse à la détection de ces risques, etc.

Pour remplir les fonctions souhaitées, les systèmes d'aide à la conduite fonctionnent à l'aide de capteurs équipant le véhicule et permettant de percevoir l'environnement du véhicule, et notamment les véhicules situés à proximité. Cette perception de l'environnement par le système d'aide à la conduite permet de prévenir les risques d'accidents en garantissant le respect de règles prédéfinies, comme par exemple celle d'imposer que le véhicule se maintienne à une distance minimale du véhicule qui le précède.

Parmi les différentes fonctions d'aide à la conduite, il est connu une fonction de régulation longitudinale adaptative, couramment désignée par le sigle anglais ACC (pour « *adaptative cruise control* »). Cette fonction a pour but de maintenir le véhicule à une vitesse de consigne définie par le conducteur, tout en régulant la vitesse du véhicule pour gérer le suivi d'un véhicule plus lent le cas échéant. Ainsi, si un véhicule circulant à une vitesse inférieure à la vitesse de consigne définie par le conducteur précède le véhicule concerné, le système d'aide à la conduite va gérer le freinage de ce dernier. Toutefois, le conducteur reste responsable de la conduite du véhicule et doit être en mesure d'intervenir à n'importe quel moment si la situation l'exige.

Certains systèmes de régulation de vitesse peuvent mettre en oeuvre une fonction de détection de la vitesse maximale autorisée applicable au véhicule. Une telle fonction permet au système de régulation de vitesse de réguler la vitesse du véhicule à la vitesse limite réglementaire applicable au véhicule à chaque instant, ce qui implique de modifier automatiquement la vitesse de consigne en cas de changement de la vitesse maximale autorisée.

On connait par le document FR3055287 un dispositif et procédé de détermination d'une limitation de vitesse. On connait par le document US2018/273020 un procédé de fonctionnement d'un système start-stop et véhicule automobile. On connait par le document FR3064967 une détermination d'une consigne de vitesse pour un véhicule par la détection des panneaux de signalisation et en fonction des informations du conducteur. On connait par le document US2017/072952 un dispositif et procédé d'aide à la conduite.

Afin de déterminer la vitesse maximale autorisée applicable au véhicule, un système de régulation s'appuie généralement sur les informations fournies par une caméra frontale, permettant la détection et l'identification de panneaux de limitation de vitesse sur les images fournies par la caméra. Si le véhicule est équipé d'un système de navigation par géolocalisation, les informations cartographiques utilisées par ce système peuvent inclure des informations relatives à la vitesse maximale autorisée de la route (ou de la voie) sur laquelle circule le véhicule. L'avantage d'utiliser les données de géolocalisation est que celles-ci sont disponibles de façon plus précoce que les données déduites des images captées par une caméra (qui permettent généralement d'identifier un panneau de limitation de vitesse à une distance de plusieurs dizaines de mètres). Lorsqu'un véhicule est équipé à la fois d'une caméra et d'un système de navigation, il est nécessaire de prendre en compte le fait que les informations relatives à la vitesse maximale autorisée applicable déterminées par le biais de la caméra d'une part, et par le biais du système de navigation d'autre part, peuvent être contradictoires. Une stratégie généralement mise en oeuvre par un système de régulation de vitesse consiste à appliquer les principes généraux suivants :
- Si les données relatives à la cartographie indiquent une limitation de vitesse à venir, alors cette information est utilisée en avance dans le cas d'une limitation de vitesse descendante (c'est-à-dire un changement de vitesse maximale autorisée impliquant un ralentissement), et au niveau du panneau dans le cas d'une limitation de vitesse montante.
- Si les données fournies par la caméra indiquent une limitation de vitesse, alors la priorité est donnée à la limitation de vitesse donnée par la caméra : la limitation de vitesse donnée par la caméra est substituée à celle donnée par la cartographie.

Afin de tenir compte de situations particulières, il est en outre possible de mettre en oeuvre les principes particuliers suivants :
- si les données cartographiques indiquent qu'une voie de sortie est présente, et que les données fournies par la caméra indiquent un nouveau panneau de limitation de vitesse détecté sur la droite (dans le cas d'un pays avec circulation à droite), alors ce panneau est ignoré par le système de régulation, et la limitation de vitesse courante est maintenue comme étant celle applicable ;
- si le véhicule effectue un virage important (ce qui est déterminé par le système de régulation de vitesse en se basant sur vitesse du véhicule et la vitesse de lacet), et que la limitation de vitesse déterminée par le biais de la caméra est différente de celle déterminée par le biais des informations cartographiques, alors la vitesse maximale autorisée prise en compte est celle déterminée par le biais de la cartographie ;
- si le véhicule vient de passer une intersection, on reprend la vitesse maximale autorisée déterminée par le biais de la cartographie si celle-ci est différente de la limitation de vitesse déterminée avant l'intersection par le biais de la caméra ; L'application de l'ensemble des principes décrits ci-dessus n'empêche cependant pas que des informations erronées parviennent au système de régulation de vitesse, que celles-ci proviennent du système de navigation (par exemple en cas de données cartographiques erronées pour cause d'obsolescence si les mises à jour requises n'ont pas été effectuées), ou de la caméra, par exemple en cas de détection d'un panneau de limitation de vitesse qui n'est pas pertinent.

La présente invention a pour but de remédier aux inconvénients de l'état de la technique, et plus particulièrement ceux ci-dessus exposés, en proposant un procédé de détermination de la vitesse maximale autorisée pour un véhicule automobile mettant en oeuvre une fonction de régulation de vitesse qui permette de limiter au maximum les erreurs de détermination de la vitesse maximale autorisée.

À cet effet, l'invention concerne un procédé de détermination de la vitesse maximale autorisée applicable à un véhicule automobile, ci-après véhicule hôte, le procédé comportant les étapes de :
- déterminer une première vitesse limite, basée sur les données cartographiques provenant d'un système de navigation équipant le véhicule hôte ;
- déterminer une deuxième vitesse limite, basée sur la détection de panneaux de limitation de vitesse sur les images fournies par une caméra équipant le véhicule hôte ;
- déterminer une troisième vitesse limite, basée sur la mesure de la vitesse des véhicules situés dans l'environnement du véhicule hôte ;
- déterminer la vitesse maximale autorisée applicable au véhicule hôte, celle-ci étant égale à la première vitesse limite ou à la deuxième vitesse limite, la troisième vitesse limite étant utilisée pour choisir entre la première et la deuxième vitesses limites lorsque ces deux premières vitesses ne sont pas égales.

Ainsi, le procédé conforme à l'invention, en utilisant une troisième source de données pour estimer la vitesse maximale autorisée, permet de choisir entre la vitesse déterminée par le biais de la caméra embarquée et celle déterminée par le biais des données cartographiques lorsque ces deux premières vitesses ne sont pas égales. En utilisant une troisième source de données lorsque les deux premières sources de données ne sont pas cohérentes, on limite très fortement le risque d'une erreur dans la détermination de la vitesse maximale autorisée applicable au véhicule automobile.

Dans une réalisation, la vitesse maximale autorisée applicable au véhicule hôte est égale à la première et à la deuxième vitesses limites si ces dernières sont égales.

Dans une réalisation, la vitesse maximale autorisée applicable au véhicule hôte est déterminée comme étant la vitesse la plus proche de la troisième vitesse limite parmi les première et deuxième vitesses limites.

Dans une réalisation, la vitesse la plus proche de la troisième vitesse limite parmi les première et deuxième vitesses limites est prise en compte seulement si elle est la plus grande des première et deuxième vitesses limites.

Dans une réalisation, la détermination de la troisième vitesse limite est basée sur la mesure de la vitesse des véhicules circulant dans le même sens que le véhicule hôte.

Dans une réalisation, la détermination de la troisième vitesse limite prend également en compte la vitesse des véhicules circulant dans le sens inverse du véhicule hôte.

Dans une réalisation, la mesure de la vitesse des véhicules situés dans l'environnement du véhicule hôte est réalisée au moyen d'un ou plusieurs capteurs de type radar et/ou au moyen d'une ou plusieurs caméras. L'invention concerne également un système de conduite assistée comportant un calculateur et au moins une caméra pour mettre en oeuvre le procédé tel que défini ci-dessus.

L'invention concerne également un véhicule automobile équipé d'un système de conduite assistée tel que défini ci-dessus et/ou mettant en oeuvre un procédé tel que défini plus haut.

L'invention concerne également un procédé de régulation de vitesse pour un véhicule automobile, dans lequel la vitesse de consigne est déterminée en fonction de la vitesse maximale autorisée, cette dernière étant déterminée conformément au procédé défini plus haut.

La présente invention sera mieux comprise à la lecture de la description détaillée qui suit, faite en référence aux dessins annexés, dans lesquels :
[Fig. 1] La figure 1 représente un véhicule automobile équipé d'un système de conduite assistée permettant la mise en oeuvre d'un procédé conforme à l'invention.
[Fig. 2] La figure 2 représente les étapes de mise en oeuvre d'un procédé conforme à l'invention.

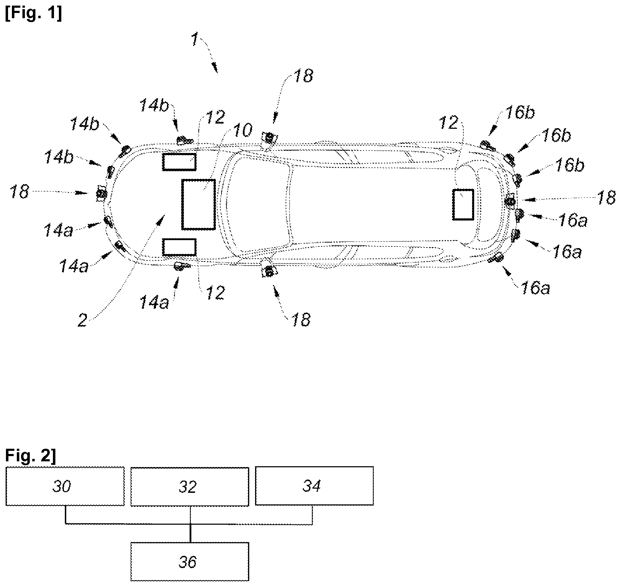

La figure 1 représente un véhicule automobile apte à mettre en oeuvre une ou plusieurs fonctions d'aide à la conduite, et qui est à cet effet équipé d'un système de conduite assistée 2. Dans la suite de la présente description ce véhicule sera dénommé véhicule hôte 1. Le système de conduite assistée 2 comporte notamment un calculateur 10, des actionneurs 12, ainsi qu'une pluralité de détecteurs, dans l'exemple une pluralité de capteurs 14a, 14b, 16a, 16b, 18 répartis sur l'avant, l'arrière et les côtés du véhicule hôte 1. Ces capteurs peuvent inclure un ou plusieurs des types de capteurs suivants : capteurs à ultrasons, radars, lidars, caméras à vision de jour, caméras à vision de nuit, etc. Le système de conduite assistée 2 comporte dans l'exemple quatre caméras 18 (soit une caméra avant, une caméra arrière et deux caméras latérales) et une pluralité de capteurs 14a, 14b, 16a, 16b de type capteur à ultrasons et/ou radar et/ou lidar. Le calculateur 10 reçoit les données fournies par l'ensemble des capteurs 14a, 14b, 16a, 16b et par l'ensemble des caméras 18.

Grâce à l'ensemble de ces capteurs, le calculateur 10 est apte à détecter la présence d'obstacles dans l'environnement du véhicule, et en particulier la présence de véhicules dans cet environnement, que ce soit sur la voie courante du véhicule hôte 1 ou sur les voies adjacentes.

Le calculateur 10 est par ailleurs relié à une pluralité d'actionneurs 12, qui comportent des dispositifs aptes à agir notamment sur l'accélérateur et le système de freinage du véhicule hôte, afin d'en contrôler l'allure.

Avantageusement, les actionneurs 12 comportent également des dispositifs aptes à agir sur la direction du véhicule afin d'en contrôler la trajectoire.

Le système de conduite assistée est configuré pour mettre en oeuvre, dans un mode de conduite assistée, une ou plusieurs fonctions d'assistance, dont notamment une fonction de régulation de vitesse adaptative, ci-après fonction ACC. Ainsi que mentionné plus haut, une telle fonction permet de réguler la vitesse du véhicule sans intervention du conducteur (ce dernier devant toutefois conserver le contrôle du véhicule, et en particulier le contrôle de la direction, puisqu'il s'agit là d'une fonction d'assistance), en respectant une consigne de distance de sécurité vis-à-vis du véhicule précédant le véhicule hôte, c'est-à-dire un écart minimum entre ces deux véhicules. La fonction ACC est en outre apte à gérer le ralentissement du véhicule, si le ralentissement du véhicule le précédant l'impose. De préférence, le système de conduite assistée 2 comporte au moins une caméra et un capteur de type radar pour mettre en oeuvre la fonction ACC décrite ci-dessus.

Le système de conduite assistée 2 est par ailleurs configuré pour déterminer la vitesse maximale autorisée applicable au véhicule hôte 1, de façon à ce qu'un changement de cette vitesse implique un changement automatique de la vitesse de consigne utilisée pour la régulation de vitesse.

Conformément à l'invention, la détermination de la vitesse maximale autorisée applicable au véhicule hôte 1 repose sur l'utilisation et la comparaison de trois sources de données différentes :
- des données cartographiques, provenant du système de navigation embarqué (non représenté), ces données permettant de déterminer une première vitesse limite (figure 2, étape 30) ;
- des données provenant de la caméra 18 frontale embarquée, qui permette de réaliser la détection et la lecture des panneaux de limitation de vitesse, ces données permettant de déterminer une deuxième vitesse limite (figure 2, étape 32) ;
- des données basées sur la mesure de la vitesse des véhicules situées dans l'environnement du véhicule hôte 1, ces données permettant de déterminer une troisième vitesse limite (figure 2, étape 34).

Les vitesses limites ainsi calculées sont utilisées pour la détermination de la vitesse maximale autorisée applicable au véhicule hôte 1 (figure 2, étape 36). On distingue alors deux principaux cas :
- si la première et la deuxième vitesses limites sont égales, alors la vitesse maximale autorisée applicable est égale à la valeur de ces deux vitesses.
- si la première et la deuxième vitesses limites ne sont pas égales, alors il est possible d'utiliser la troisième vitesse limite afin de décider, de la première et de la deuxième vitesses limites, laquelle doit être retenue comme vitesse maximale autorisée applicable.

Dans ce dernier cas, différentes stratégies peuvent être appliquées pour déterminer la vitesse maximale autorisée. Il est par exemple possible de décider que la vitesse maximale autorisée applicable au véhicule hôte 1 sera déterminée comme étant la vitesse la plus proche de la troisième vitesse limite, parmi les première et deuxième vitesses limites. Par exemple, si les données cartographiques indiquent que la valeur maximale autorisée est de 90 km/h, et qu'un panneau de limitation à une vitesse de 50 km/h apparait sur les images captées par la caméra frontale embarquée, et que la moyenne de la vitesse mesurée des véhicules situés à proximité du véhicule hôte 1 est proche de 85 km/h, alors c'est la vitesse déterminée grâce aux données cartographiques qui sera retenue comme étant la vitesse maximale autorisée applicable au véhicule hôte 1 (soit 90 km/h).

On pourra en outre prévoir des limites au principe général donné ci-dessus, par exemple en prévoyant que l'on retient la vitesse limite la plus proche de la troisième limite uniquement dans le cas où il s'agit de la plus grande valeur parmi les première et deuxième vitesses limites. Dans un tel cas, on aurait la situation suivante :
- si la première vitesse limite (données cartographiques) est supérieure à la deuxième vitesse limite (données caméra), et que la troisième vitesse limite (données véhicules environnants) est plus proche de la première vitesse limite, alors c'est cette dernière qui est retenue comme valeur de la vitesse maximale autorisée ;
- si la deuxième vitesse limite (données caméra) est supérieure à la première vitesse limite (données cartographiques), et que la troisième vitesse limite (données véhicules environnants) est plus proche de la deuxième vitesse limite, alors c'est cette dernière qui est retenue comme valeur de la vitesse maximale autorisée ;
- si la troisième vitesse limite (données véhicules environnants) est en revanche proche de la plus petite vitesse parmi les deux premières vitesses limites, alors on ne retient pas la plus petite valeur, car il peut s'agir d'une situation particulière, par exemple un ralentissement ou un embouteillage.

La mesure de la vitesse des véhicules environnants pourra être réalisée au moyen d'un ou plusieurs capteurs embarqués, les capteurs pouvant être d'un ou plusieurs types : par exemple un ou plusieurs capteurs radar, une ou plusieurs caméras embarquées, etc. Les véhicules pris en compte pourront être uniquement ceux roulant dans le même sens que le véhicule hôte 1, voire uniquement ceux situés devant ce dernier. Alternativement, les véhicules circulant en sens inverse pourront également être pris en compte.

## Revendications

1. Procédé de détermination de la vitesse maximale autorisée applicable à un véhicule automobile, ci-après véhicule hôte (1), le procédé comportant les étapes de :
- déterminer (30) une première vitesse limite, basée sur les données cartographiques provenant d'un système de navigation équipant le véhicule hôte (1) ;
- déterminer (32) une deuxième vitesse limite, basée sur la détection de panneaux de limitation de vitesse sur les images fournies par une caméra équipant le véhicule hôte (1) ;
- déterminer (34) une troisième vitesse limite, basée sur la mesure de la vitesse des véhicules situés dans l'environnement du véhicule hôte (1) ;
- déterminer (36) la vitesse maximale autorisée applicable au véhicule hôte (1), celle-ci étant égale à la première vitesse limite ou à la deuxième vitesse limite,
**caractérisé en ce que**
la troisième vitesse limite est utilisée pour choisir entre la première et la deuxième vitesses limites lorsque ces deux vitesses sont différentes.

2. Procédé selon la revendication précédente, dans lequel la vitesse maximale autorisée applicable au véhicule hôte (1) est égale à la première et à la deuxième vitesses limites si ces dernières sont égales.

3. Procédé selon l'une des revendications précédentes, dans lequel la vitesse maximale autorisée applicable au véhicule hôte (1) est déterminée comme étant la vitesse la plus proche de la troisième vitesse limite parmi les première et deuxième vitesses limites.

4. Procédé selon la revendication précédente, dans laquelle la vitesse la plus proche de la troisième vitesse limite parmi les première et deuxième vitesses limites est prise en compte seulement si elle est la plus grande des première et deuxième vitesses limites.

5. Procédé selon l'une des revendications précédentes, dans lequel la détermination de la troisième vitesse limite est basée sur la mesure de la vitesse des véhicules circulant dans le même sens que le véhicule hôte (1).

6. Procédé selon la revendication précédente, dans lequel la détermination de la troisième vitesse limite prend également en compte la vitesse des véhicules circulant dans le sens inverse du véhicule hôte (1).

7. Procédé selon l'une des revendications précédentes, dans lequel la mesure de la vitesse des véhicules situés dans l'environnement du véhicule hôte (1) est réalisée au moyen d'un ou plusieurs capteurs (14a, 14b, 16a, 16b, 18) de type radar et/ou au moyen d'une ou plusieurs caméras (18).

8. Programme d'ordinateur comprenant des instructions qui, lorsque le programme est exécuté par un ordinateur, conduisent celui-ci à mettre en oeuvre les étapes du procédé selon l'une des revendications 1 à 7.

9. Système de conduite assistée (2) comportant un calculateur (10) et au moins une caméra (18) agencés pour mettre en oeuvre le procédé conforme à l'une des revendications 1 à 7.

10. Véhicule automobile (1) équipé d'un système de conduite assistée (2) conforme à la revendication précédente.

## Patentansprüche

1. Verfahren zur Bestimmung der zulässigen Höchstgeschwindigkeit, die auf ein Kraftfahrzeug, im Folgenden Host-Fahrzeug (1) genannt, anwendbar ist, wobei das Verfahren die folgenden Schritte umfasst: :
- Bestimmen (30) einer ersten Geschwindigkeitsbegrenzung auf der Grundlage von Kartendaten, die von einem Navigationssystem stammen, mit dem das Host-Fahrzeug (1) ausgestattet ist;
- Bestimmen (32) einer zweiten Geschwindigkeitsbegrenzung, basierend auf der Erfassung von Geschwindigkeitsbegrenzungsschildern auf Bildern, die von einer Kamera geliefert werden, mit der das Host-Fahrzeug (1) ausgestattet ist;
- Bestimmen (34) einer dritten Geschwindigkeitsbegrenzung, basierend auf der Messung der Geschwindigkeit von Fahrzeugen, die sich in der Umgebung des Host-Fahrzeugs (1) befinden ;
- Bestimmen (36) der für das Host-Fahrzeug (1) geltenden zulässigen Höchstgeschwindigkeit, wobei diese gleich der ersten Grenzgeschwindigkeit oder der zweiten Grenzgeschwindigkeit ist, **dadurch gekennzeichnet, dass** die dritte Grenzgeschwindigkeit verwendet wird, um zwischen der ersten und der zweiten Grenzgeschwindigkeit zu wählen, wenn diese beiden Geschwindigkeiten unterschiedlich sind.

2. Verfahren nach dem vorhergehenden Anspruch, wobei die für das Gastfahrzeug (1) geltende zulässige Höchstgeschwindigkeit gleich der ersten und der zweiten Grenzgeschwindigkeit ist, wenn diese gleich sind.

3. Verfahren nach einem der vorhergehenden Ansprüche, wobei die für das Host-Fahrzeug (1) geltende zulässige Höchstgeschwindigkeit als die Geschwindigkeit bestimmt wird, die von der ersten und der zweiten Grenzgeschwindigkeit der dritten Grenzgeschwindigkeit am nächsten kommt.

4. Verfahren nach dem vorhergehenden Anspruch, wobei die Geschwindigkeit, die unter der ersten und der zweiten Grenzgeschwindigkeit der dritten Grenzgeschwindigkeit am nächsten kommt, nur dann berücksichtigt wird, wenn sie die größte der ersten und der zweiten Grenzgeschwindigkeit ist.

5. Verfahren nach einem der vorhergehenden Ansprüche, wobei die Bestimmung der dritten Grenzgeschwindigkeit auf der Messung der Geschwindigkeit von Fahrzeugen basiert, die in der gleichen Richtung wie das Host-Fahrzeug (1) fahren.

6. Verfahren nach dem vorhergehenden Anspruch, wobei die Bestimmung der dritten Grenzgeschwindigkeit auch die Geschwindigkeit von Fahrzeugen berücksichtigt, die in die entgegengesetzte Richtung des Wirtsfahrzeugs (1) fahren.

7. Verfahren nach einem der vorhergehenden Ansprüche, wobei die Messung der Geschwindigkeit von Fahrzeugen in der Umgebung des Host-Fahrzeugs (1) mittels eines oder mehrerer Sensoren (14a, 14b, 16a, 16b, 18) vom Typ Radar und/oder mittels einer oder mehrerer Kameras (18) durchgeführt wird.

8. Computerprogramm mit Anweisungen, die, wenn das Programm von einem Computer ausgeführt wird, diesen dazu veranlassen, die Schritte des Verfahrens nach einem der Ansprüche 1 bis 7 auszuführen.

9. Assistiertes Fahrsystem (2) mit einem Rechner (10) und mindestens einer Kamera (18), die so angeordnet sind, dass sie das Verfahren gemäß einem der Ansprüche 1 bis 7 ausführen.

10. Kraftfahrzeug (1) mit einem Fahrassistenzsystem (2) gemäß dem vorhergehenden Anspruch.

## Claims

1. A method of determining the maximum permissible speed applicable to a motor vehicle, hereinafter referred to as a host vehicle (1), the method comprising the steps of:
- determining (30) a first speed limit, based on map data from a navigation system equipping the host vehicle (1);
- determining (32) a second speed limit, based on the detection of speed limit signs on images provided by a camera equipped with the host vehicle (1);
- determine (34) a third speed limit, based on the measurement of the speed of vehicles located in the environment of the host vehicle (1);
- determining (36) the maximum authorized speed applicable to the host vehicle (1), the latter being equal to the first limit speed or to the second limit speed, **characterized in that** the third limit speed is used to choose between the first and the second limit speeds when these two speeds are different.

2. The method according to the preceding claim, wherein the maximum allowable speed applicable to the host vehicle (1) is equal to the first and second limit speeds if the latter are equal.

3. The method according to any of the preceding claims, wherein the maximum allowable speed applicable to the host vehicle (1) is determined to be the speed closest to the third limit speed among the first and second limit speeds.

4. The method according to the preceding claim, wherein the speed closest to the third limiting speed among the first and second limiting speeds is taken into account only if it is the greater of the first and second limiting speeds.

5. The method according to any of the preceding claims, wherein the determination of the third limit speed is based on measuring the speed of vehicles traveling in the same direction as the host vehicle (1).

6. The method according to the preceding claim, wherein the determination of the third speed limit also takes into account the speed of vehicles traveling in the opposite direction of the host vehicle (1).

7. The method according to any of the preceding claims, wherein the measurement of the speed of vehicles in the environment of the host vehicle (1) is performed by means of one or more sensors (14a, 14b, 16a, 16b, 18) of radar type and/or by means of one or more cameras (18).

8. A computer program comprising instructions which, when the program is executed by a computer, cause the computer to implement the steps of the method according to any of claims 1 to 7.

9. A driving assistance system (2) comprising a computer (10) and at least one camera (18) arranged to implement the method according to any of claims 1 to 7.

10. A motor vehicle (1) equipped with a driving assistance system (2) according to the preceding claim.
